# EUROPÄISCHE PATENTSCHRIFT

(11) **EP 3 815 973 B1**
(45) Veröffentlichungstag und Bekanntmachung des Hinweises auf die Patenterteilung: **20.10.2021**
(21) Anmeldenummer: 19205814.7
(22) Anmeldetag: 29.10.2019
(51) Int. Cl.: B60Q 1/30, B60Q 1/00

(54) **FAHRZEUGLEUCHTE MIT AKTIVER RÜCKSTRAHLLICHTFUNKTION**
VEHICLE LAMP WITH ACTIVE REFLEX REFLECTOR FUNCTION
LAMPE POUR VÉHICULE À FONCTION CATADIOPTRIQUE ACTIVE

(43) Veröffentlichungstag der Anmeldung: 05.05.2021
(73) Patentinhaber: odelo GmbH, 70329 Stuttgart (DE)
(72) Erfinder: VOLLMER, Marco, 73728 Esslingen am Neckar (DE)
(74) Vertreter: Benninger, Johannes

(56) Entgegenhaltungen:
- EP-A1- 1 950 089
- EP-A1- 2 540 569
- DE-A1- 10 103 702
- GB-A- 1 567 306

## Beschreibung

Die Erfindung betrifft eine Fahrzeugleuchte gemäß dem Oberbegriff des Anspruchs 1.

Insbesondere beschäftigt sich die Erfindung mit einer Verbesserung der Sicht- und Wahrnehmbarkeit von Fahrzeugen, insbesondere von zur Teilnahme am Straßenverkehr vorgesehenen Fahrzeugen, die momentan nicht am fließenden Verkehr, sondern stattdessen - insbesondere bei Nacht - zumindest zeitweilig am ruhenden Verkehr teilnehmen.

Zur Sichtbarmachung von am Straßenverkehr teilnehmenden oder zur Teilnahme am Straßenverkehr vorgesehenen Fahrzeugen bei Nacht sind am Fahrzeug angeordnete Fahrzeugleuchten bekannt, welche jeweils eine oder mehrere bei der Teilnahme am Straßenverkehr gesetzlich vorgeschriebene Lichtfunktionen zu erfüllen in der Lage sind.

Eine solche Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schluss- oder Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, beispielsweise zur Fahrtrichtungsanzeige, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central High-Mounted Braking Lights oder Central High Mounted Stop Lamps, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um auch bei abgestelltem, am ruhenden Verkehr teilnehmendem Fahrzeug dieses für andere Verkehrsteilnehmer bei Nacht besser erkennbar zu machen sind Rückstrahler und/oder retroreflektierende Reflektoren - kurz Retro-Reflektoren - bekannt.

Das Prinzip von Rückstrahlern basiert auf der Retroreflexion von Licht. Dies kann bei Spiegeln mittels einer einseitigen Bedampfung erreicht werden. Insbesondere aus Effizienz- und Kostengründen wird häufig auf das Prinzip der Totalreflexion zurückgegriffen, da hierbei keine einseitige Bedampfung erforderlich ist. Grundsätzlich sind aber auch Systeme mit einer Verspiegelung umsetzbar.

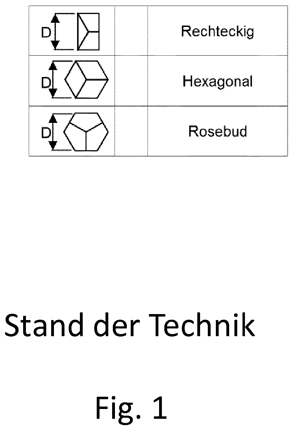

Ein Rückstrahler oder Retro-Reflektor ist vereinfacht beschrieben ein Spiegel,□der das auf ihn einfallende Licht in entgegengesetzter Richtung zurücksendet. Rückstrahler oder Retro-Reflektoren können beispielsweise durch Tripelspiegel oder Prismensysteme verwirklicht sein. Fig. 1 zeigt verschiedene Ausführungsbeispiele von zur Verwirklichung von Retro-Reflektoren geeigneten Spiegel- und/oder Prismensystemen.

Bei einem Tripelspiegel sind drei ebene Spiegelflächen senkrecht zueinander angeordnet.

Auf seinem Weg wird ein eintretender Lichtstrahl dreimal total reflektiert und hat außerdem die Oberfläche des Rückstrahlers zweimal zu durchdringen. Zu beachten ist, dass der Strahl innerhalb des Tripels wird der austretende Lichtstrahl gegenüber dem eintretenden Lichtstrahl um einen Strahlenversatz versetzt.

Die reflektierte Lichtleistung hängt entscheidend von der Winkelgenauigkeit der drei ebenen Spiegel ab.

Zu den Prismensystemen zählen beispielsweise Pyramidensysteme und Stiftesysteme. Bekannte Ausgestaltungen sind Perkin-Elmer-Pyramiden, Rhomben-Pyramiden und abgewandelte Rhomben-Pyramiden.

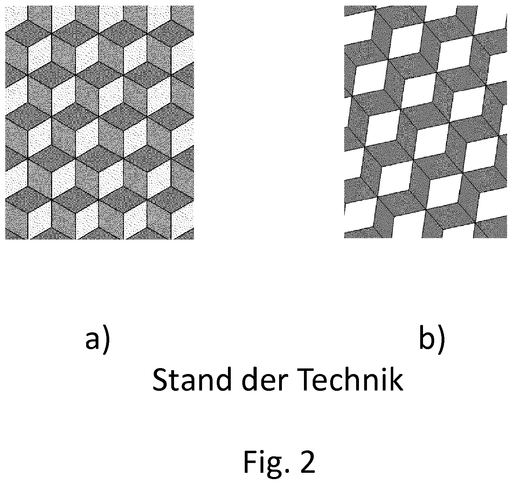

Bei in Fig. 2 dargestellten Perkin-Elmer-Pyramiden handelt es sich um Pyramiden, die aus drei senkrecht zueinander stehenden, ebenen Flächen aufgebaut sind. Die Flächen sind dreifach angeschliffen. Hierdurch bilden sie rückstrahlende Sechsecke, die sehr wirkungsvoll in der Rückstrahlwirkung sind. Die gesamte, mit Perkin-Elmer-Pyramiden besetzte Fläche ist rückstrahlend. Dementsprechend beträgt die auch als Rückstrahlwirkung bezeichnete rückstrahlende Fläche 100%.

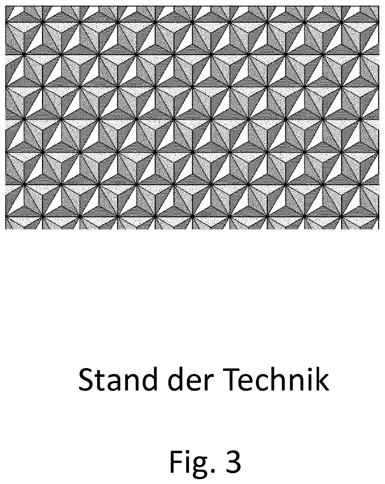

Bei in Fig. 3 gezeigten Rhomben-Pyramiden handelt es sich um dreiseitige Pyramiden mit nicht reflektierenden Dreiecken. Die Rückstrahlwirkung beträgt 66%. Beispielsweise basieren Reflexfolien häufig auf Rhomben-Pyramiden.

Im Gegensatz zu Rhomben-Pyramiden sind die bei Rhomben-Pyramiden nicht reflektierenden Sechsecke bei abgewandelten Rhomben-Pyramiden abgeschliffen und hierdurch zu reflektierenden sechseckigen Sternen umgewandelt. Die rückstrahlende Fläche beträgt 88,9%. Abgewandelten Rhomben-Pyramiden finden häufig Anwendung bei Rückstrahlern im Straßenverkehrsraum und in der Fahrzeugausrüstung.

Zur Verbesserung der Erkennung von am Straßenverkehr, insbesondere am ruhenden Straßenverkehr teilnehmenden Fahrzeugen bei Nacht sind Rückstrahler gesetzlich vorgeschrieben.

Aktuell sind Rückstrahler an bestimmten Stellen am Fahrzeug vorgeschrieben. Bei Fahrzeuganhängern und auch Fahrrädern sind sie zwingend und dienen der Erhöhung der Sicherheit. Bei Automobilen sind nach hinten gerichtete Rückstrahler zwingend, zur Seite gerichtete nur in einigen Ländern zwingend und nach vorne gerichtete Rückstrahler nicht zwingend vorgeschrieben. Letztere können aber beispielsweise im Geltungsbereich der ECE-Regelungen angebracht werden und so auch in dieser momentan eher unüblichen Richtung die Sicherheit erhöhen.

Rückstrahler bestehen meist aus Kunststoff, wie beispielsweise PMMA (Polymethylmethacrylat), seltener aber auch aus Glas. Oftmals tragen sie rückseitig angeformte Tripelprismen, die durch Totalreflexion wie Tripelspiegel funktionieren. Sie sind hinten abgedeckt, um Reflexionsverluste durch Schmutz und Feuchtigkeit, wie etwa Kondenswasser, zu vermeiden. Weiterhin gibt es auch Reflektorfolien mit beispielsweise direkt verspiegelten, offen liegenden Glaskugeln. Auch Kombinationen der genannten Systeme finden sich nach dem Stand der Technik.

Für die Funktionsweise von Retroreflektoren/Rückstrahler kann beispielsweise folgende Zusammenfassung herangezogen werden, auf die an dieser Stelle daher nicht näher eingegangen wird: http://de.wikipedia.org/wiki/Retroreflektor.

Für die Funktionsweise von Reflektorfolien kann beispielsweise folgende Zusammenfassung herangezogen werden, auf die an dieser Stelle daher nicht näher eingegangen wird: http://de.wikipedia.org/wiki/Reflektorfolie.

Konventionellen Rückstrahler, wie sie durch die voranstehend beispielhaft und nicht abschließend beschriebenen Spiegel- und/oder Prismensysteme verwirklicht sein können, können in eine Fahrzeugleuchte integriert sein, beispielsweise durch Anordnung in oder auf einem ansonsten keiner Lichtfunktion zur Verfügung stehenden Bereich der Lichtscheibe.

Beispielsweise kann eine in Spritzgusstechnik hergestellte Lichtscheibe in einem solchen ansonsten keiner Lichtfunktion zur Verfügung stehenden Bereich an ihrer dem Leuchteninnenraum zugewandten Innenseite zur Verwirklichung eines Rückstrahlers mit einem Spiegel- und/oder Prismensystem versehen sein.

In spritzgegossenen Teilen, insbesondere im Bereich von Fahrzeugen, sind die in Fig. 1, Fig. 2, Fig. 3 gezeigten Prismenstrukturen für Rückstrahler einschließlich der zuvor beschriebenen Tripelspiegel oder-prismen bekannt.

Nachteilig an solchen Rückstrahlern ist deren aufwendige Herstellung für die in der Regel komplexe und kostenintensive Galvano-Stiftanordnungen hergestellt werden müssen, um die Rückstrahler vorzugswiese spritzgusstechnisch herstellen zu können, so dass diese auch die gesetzlichen Anforderungen bezüglich deren Lichtwerte erfüllen können. Da die Rückstrahler höchste Anforderungen an die Oberflächen und deren Winkel und/oder Geometrien stellen, sind konventionelle Fräsverfahren meist nicht ausreichend gut geeignet, um Werkzeuge für Rückstrahler herstellen zu können. Selbst mittels Ultrapräzisionsbearbeitung, wie etwa Diamantbearbeitung, lassen sich Trippelprismen nur mit hohem Aufwand herstellen, einhergehend mit einigen weiteren Nachteilen, wie beispielsweise der Standfestigkeit des Werkzeugs, da die Bearbeitung meist auf galvanisch abgeschiedene Nickel-Phosphor-(NiP-)Schichten erfolgt, um die Schärfe des Diamantwerkzeugs während der durch Spanen mit geometrisch bestimmter Schneide stattfindenden Bearbeitung aufrecht zu erhalten, weil gehärteter Stahl als Werkstoff nicht sinnvoll für eine Diamantbearbeitung einsetzbar ist.

Rückstrahler haben außerdem den Nachteil einer nur eingeschränkten Rückstrahlung desjenigen Lichts, mit denen sie angestrahlt werden. Auch ist der Raumwinkelbereich, in dem sie das Licht zu der Lichtquelle, von der sie angestrahlt werden, mit brauchbarer Intensität zurückstrahlen, stark eingeschränkt.

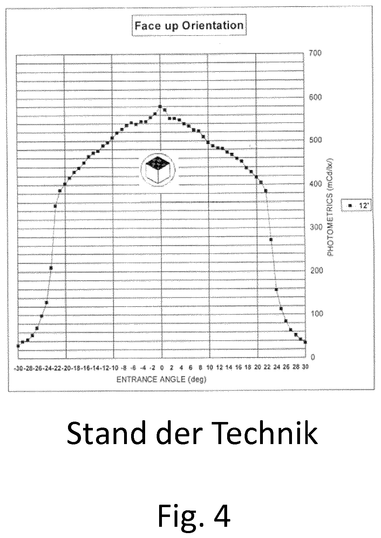

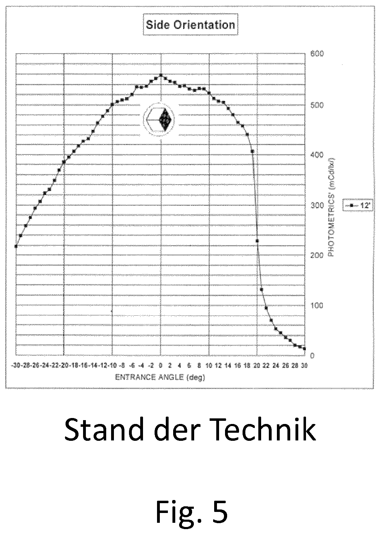

So stellt es sich als nachteilig heraus, dass der lichttechnische Akzeptanzwinkel der Rückstrahler relativ gering ist und dadurch die Effizienz der Rückstrahlwirkung mit einer Abweichung zum senkrechten Lichteinfall auf den Retro-Reflektor stark zurückgeht. Dies ist exemplarisch aus den Messungen von hexagonalen Rückstrahler(pins) erkennbar, die in Fig. 4 und Fig. 5 dargestellt sind.

Erkennbar ist für den Rückstrahler in Fig. 4, dass der zurückgestrahlte Lichtwert von rund 580 mcd/Ix, bei senkrechtem Lichteinfall, auf die Hälfte dieses Wertes zurückgeht, bei einem Lichteinfall von bereits 23° zur senkrechten Achse. Bei 30° zur senkrechten Achse ist erkennbar, dass nur noch rund 40 mcd/Ix zurückreflektiert werden, entsprechend einem Abfall des Lichtwertes auf rund 7 % des Lichtwertes bei senkrechtem Einfall. Bei der Orientierung des Rückstrahlers nach oben, wie in Fig. 4 dargestellt, ist die Wirkung nach beiden Seiten gleich, weil diese Rückstrahler symmetrisch zur Mittelsenkrechten ausgerichtet sind.

Wird der Rückstrahler(pin) gedreht angeordnet, ändert sich die Verteilung, wie in Fig. 5 gezeigt. Allerdings ist auch hier die Schwäche des Rückstrahlers erkennbar bezüglich seines relativ eingeschränkten Akzeptanzwinkels und seines starken Abfalls der Rückstrahlerlichtwerte insbesondere zu einer Seite hin.

Verstärkt wird die Herausforderung mit dem Akzeptanzwinkel noch zusätzlich durch die Flächenkrümmung von aktuellen Lichtscheiben insbesondere von Scheinwerfern und Heckleuchten, mit Winkeln größer als 25°...40°...45°, wobei je nach Rückstrahlerlösung andere Werte gelten. Dies führt zusätzlich zu einer Begrenzung der funktionalen Fläche des Rückstrahlers.

Der Beitrag bekannter Rückstrahler und retroreflektierender Reflektoren zur nachhaltigen Steigerung der Verkehrssicherheit lässt demnach zu wünschen übrig und ist verbesserungswürdig.

Ein zusätzlicher Nachteil bekannter, beispielsweise in die Lichtscheibe einer Fahrzeugleuchte integrierter Rückstrahler ist die mit ihrer Anwesenheit einhergehende Beschränkung der für die von der Fahrzeugleuchte zu erfüllenden Lichtfunktionen zur Verfügung stehenden Lichtdurchtrittsfläche durch die Lichtscheibe. Dies sei besonders erwähnt, da länderspezifisch für bestimmte Lichtfunktionen zusätzlich zu den voranstehenden Ausführungen Mindestleuchtflächenanforderungen gelten. In Verbindung mit von Rückstrahlern eingenommenen Flächen in einer Lichtscheibe führt dies zu einem erhöhten Bauraumbedarf, einhergehend mit entsprechendem Leuchtenvolumen und - gewicht.

Durch DE 10 2012 007 540 A1 ist ein Reflektor mit einem retroreflektierenden Reflektor bekannt, bei dem geradlinienartige Teilflächen zwischen den reflektierenden Flächen des retroreflektierenden Reflektors für eine durch ein Leuchtmittel zu verwirklichende und zur Teilnahme eines Fahrzeugs am Straßenverkehr vorgeschriebene Lichtfunktion freigehalten sind.

Durch DE 10 2009 058 458 A1 ist eine Seitenmarkierungsleuchte bekannt, die einen retroreflektierenden Reflektor und dahinter angeordnete Lichtquellen aufweist, die ihr Licht zur Erfüllung einer Seitenlichtfunktion in den Halbraum richten, aus dessen Richtung angestrahlt der retroreflektierende Reflektor Licht zurückwirft.

Durch EP 2 540 569 A1 ist eine Fahrzeugleuchte mit aktiver Rückstrahllichtfunktion bekannt. Diese umfasst mindestens ein zumindest eine Lichtquelle umfassendes Leuchtmittel zur Erfüllung wenigstens einer Lichtfunktion, sowie Empfangsmittel (30) für auf die Fahrzeugleuchte gerichtetes Licht. Ferner umfasst sie mit den Empfangsmitteln verbundene Betätigungsmittel zur Aktivierung wenigstens eines zur Erfüllung der aktiven Rückstrahllichtfunktion vorgesehenen Leuchtmittels. Die Betätigungsmittel aktivieren das oder die zur Erfüllung der aktiven Rückstrahllichtfunktion vorgesehenen Leuchtmittel in Abhängigkeit davon, ob die Fahrzeugleuchte angestrahlt wird, oder nicht.

Durch DE 101 03 702 A1 ist bekannt, die Helligkeit einer Lichtsignalanlage automatisch zu regeln, indem die entgegen dem von der Lichtsignalanlage abgestrahlten Licht einfallende Helligkeit gemessen wird. Die automatische Regelung kann eine automatische Abschaltung einer Nebelschlusslichtfunktion umfassen.

Durch GB 1 567 306 A1 ist bekannt, eine Begrenzungslichtfunktion eines abgestellten eigenen Fahrzeugs zu aktivieren, sobald das eigene Fahrzeug von einem sich nähernden fremden Fahrzeug angestrahlt wird. Eine Zeitverzögerungsschaltung schaltet die Lichtfunktion nach einem vorgebbaren Zeitintervall ab, nach Verstreichen welchen Zeitintervalls das fremde Fahrzeug das eigene Fahrzeug passiert hat.

Durch EP 1 950 089 A1 ist bekannt, Front- und/oder Heckleuchten eines parkenden, eigenen Fahrzeugs ein- und auszuschalten, wenn ein sich näherndes fremdes Fahrzeug aufgrund von Helligkeitsänderungen erkannt wird.

Eine Aufgabe der Erfindung ist es, eine Fahrzeugleuchte zu schaffen, die einer nachhaltigen Steigerung der Verkehrssicherheit sowohl bei Teilnahme eines mit der Fahrzeugleuchte ausgestatteten Fahrzeugs am fließenden, als auch bei Teilnahme eines mit der Fahrzeugleuchte ausgestatteten Fahrzeugs am ruhendem Straßenverkehr beitragen.

Insbesondere ist es eine Aufgabe der Erfindung, eine Fahrzeugleuchte zu entwickeln, die die Sichtbarkeit eines mit ihr ausgestatteten, zur Teilnahme am fließenden Straßenverkehr vorgesehenen, jedoch momentan - insbesondere bei Nacht - am ruhenden Verkehr teilnehmenden eigenen Fahrzeugs erhöht, wenn dieses beispielsweise vom Licht eines sich nähernden, fremden Fahrzeugs angestrahlt wird.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach eine Fahrzeugleuchte mit aktiver Rückstrahllichtfunktion. Die Fahrzeugleuchte ist mit mindestens einem Leuchtmittel zur Erfüllung wenigstens einer Lichtfunktion ausgestattet. Hierbei handelt es sich zumindest um die aktive Rückstrahllichtfunktion. Die Fahrzeugleuchte ist mit Empfangsmitteln für von einer äußeren Lichtquelle auf die Fahrzeugleuchte gerichtetes Licht ausgestattet.

Die Empfangsmittel können vorteilhaft in der Lage sein, zumindest die Richtung zu erfassen, aus welcher Licht von einer äußeren Lichtquelle ausgehend auf die Fahrzeugleuchte gerichtet ist. Die Empfangsmittel sind demnach bevorzugt in der Lage zumindest die Richtung zu erfassen, in welcher Richtung sich die Lichtquelle befindet, von der aus Licht auf die Fahrzeugleuchte gerichtet ist.

Die Fahrzeugleuchte umfasst zudem mit den Empfangsmitteln verbundenen Betätigungsmitteln zur Aktivierung wenigstens eines zur Erfüllung der aktiven Rückstrahllichtfunktion vorgesehenen Leuchtmittels.

Die Betätigungsmittel aktivieren das oder die Leuchtmittel in Abhängigkeit davon, ob die Fahrzeugleuchte angestrahlt wird, oder nicht.

Die Betätigungsmittel aktivieren besonders bevorzugt ein zur Verwirklichung einer solchen Lichtfunktion vorgesehenes Leuchtmittel, deren Lichtverteilung denjenigen Raumwinkelbereich umfasst, in dem sich die Lichtquelle befindet, deren Licht auf die Fahrzeugleuchte gerichtet ist.

Es ist ersichtlich, dass die Erfindung zur Steigerung der Verkehrssicherheit einen aktiven Rückstrahler vorschlägt, der - wenn er angestrahlt wird - selbst aktiv Licht abstrahlt.

Dies ist in Zeiten des vehementen Einzugs von LEDs als Lichtquellen ohne besondere Beeinträchtigung der Energiebilanz eines Bordnetzwerks eines am Straßenverkehr teilnehmenden Fahrzeugs möglich.

Dabei kann es sich um eine Rückstrahlerlichtfunktion handeln, die in eine zur Erfüllung mehrerer Lichtfunktionen vorgesehene Fahrzeugleuchte integriert ist, oder um eine separate Rückstrahlerleuchte mit nur dieser aktiven Lichtfunktion. Die passive Lichtfunktion - wie bei konventionellen Rückstrahlern - kann in einer konventionellen Fahrzeugleuchte erhalten bleiben und/oder beispielsweise zusätzlich in eine Rückstrahlerleuchte integriert sein.

Verwirklicht ist darüber hinaus eine Alarmfunktion, welche bei Annäherung eines Objekts an die Rückstrahlerleuchte beispielsweise mit unverminderter Geschwindigkeit und/oder beispielsweise ab einer vorgebbaren Entfernung beispielsweise beginnt zu blinken oder hell aufzublitzen.

Im Vergleich zu einem passiven Rückstrahler ist ein Aufblinken zur Steigerung der Aufmerksamkeit generell möglich.

Die Erfindung beschreibt einen Rückstrahler und ein Rückstrahlersystem, dass aktiv arbeiten kann und elektromagnetische Strahlung, wenigstens Licht, zum Sender von eingestrahltem Licht zurückstrahlt unter Zuhilfenahme mindestens einer eigenen Strahlungsquelle, wenigstens Lichtquelle.

Wird der Rückstrahler bestrahlt sendet er mindestens in die auf ihn eingestrahlte Richtung Strahlung zurück. Diese Abstrahlung kann niedrigere, gleiche oder höhere Strahlungswerte aufweisen.

Auch können zusätzliche Funktionalitäten in den aktiven Rückstrahler integriert werden.

Zusätzlich kann mit einem derartigen System der Akzeptanzwinkel des Rückstrahlers vergrößert werden, der technisch bedingt bei passiven Rückstrahlern eingeschränkt ist, wie einleitend dargestellt.

Die Erfindung kann an Fahrzeugen, insbesondere an zur Teilnahme am Straßenverkehr vorgesehenen, wie etwa PKW, Nutzfahrzeugen, LKW, Anhänger, Fahrräder, aber auch an nicht zur Teilnahme am Straßenverkehr vorgesehenen Fahrzeugen, wie etwa Schiffen, Zügen, sowie an Personen oder an feststehenden Objekten, wie etwa Leitpfosten, Schifffahrtszeichen, Tonnen, Baken, etc. angebracht werden.

Die in diesem Dokument dargestellte Erfindung geht technisch konsequent einen Schritt weiter hin zu einem aktiven System, dass einige Nachteile des passiven Systems verbessern und neue Funktionalitäten mit einbringen kann.

Diese Entwicklung ist vergleichbar mit denen von kamerabasierten Außenspiegeln. Auch hier haben passive Spiegelsysteme bewährte Vorteile, aber auch entscheidende Nachteile, wie beispielsweise deren begrenzter Winkel der Einsehbarkeit, woraus für die Fahrer ein so genannter toter Winkel am Fahrzeug bestehen bleibt, der schon zu unzählig vielen Unfällen geführt hat. Durch den Einsatz von mehreren Kameras und deren Bildkomposition können die toten Winkel am Fahrzeug verringert oder gar vermieden werden und zusätzliche Funktionalitäten integriert werden, wie etwa eine aktive Fahrerwarnung am Bildschirm durch entsprechend ausgelegte Bilderkennungssoftware.

Dieser tote Winkel ist vergleichbar mit dem Akzeptanzwinkel des Rückstrahlers, der durch die Erfindung beliebig vergrößerbar ist.

Ein aktives Rückstrahlersystem kann - wie auch bei den Rückspiegelkamerasystemen - zusätzliche Funktionalitäten am Fahrzeug integrieren, wie beispielsweise ein Blinken der Lichtfunktionalität zur Aufmerksamkeitssteigerung oder zur besseren Warnfunktionalität des herannahenden Verkehrsteilnehmers.

Eine zusätzliche Erweiterung der passiven Funktionalität des Rückstrahlers kann durch den Einsatz von auch Luminophore genannten, phosphoreszenten Werkstoffen, sowie anwendungsabhängig auch fluoreszierenden Werkstoffe, deren Nachleuchtzeit quasi vernachlässigbar ist, erfolgen, durch die sich zusätzlich oder alternativ ein Nachleuchten des Rückstrahlers verwirklichen lässt, so dass eine bessere und längere Sichtbarkeit gewährleistet werden kann.

Vorteile gegenüber dem Stand der Technik sind insbesondere ein wesentlich helleres Rückstrahlen von Licht zur den Rückstrahler anstrahlenden Lichtquelle, sowie ein größerer Abstrahlwinkel im Vergleich zu dem sehr engen Rückstrahlbereich von passiven Rückstrahlern nach dem Stand der Technik.

Die Erfindung ermöglicht die Durchführung eines Verfahrens zur Verwirklichung einer aktiven Rückstrahllichtfunktion.

Ein solches Verfahren zur Verwirklichung einer aktiven Rückstrahllichtfunktion sieht in einem ersten Verfahrensschritt vor, zunächst festzustellen, ob sich eine kurz als Umgebungslichtquelle bezeichnete Lichtquelle in der Umgebung befindet, oder nicht.

Dabei können derartige Umgebungslichtquellen berücksichtigt werden, welche eine Mindestlichtstärke aufweisen. Hierdurch muss nicht jeder noch so kleinen und/oder weit entfernten Umgebungslichtquelle Licht zurückgestrahlt werden.

Alternativ oder zusätzlich können derartige Umgebungslichtquellen unberücksichtigt bleiben, welche eine Höchstlichtstärke übersteigen.

Beispielsweise kann hierdurch Sonnenlicht und/oder eine direkte helle Anstrahlung ausgeschlossen werden.

Vorzugsweise wird der erste Verfahrensschritt permanent wiederholt.

In einem zweiten Verfahrensschritt sieht das Verfahren zur Verwirklichung einer aktiven Rückstrahllichtfunktion vor, dass wenn sich eine Umgebungslichtquelle in der Umgebung befindet, zumindest eine Lichtquelle wenigstens eines zur Erfüllung der aktiven Rückstrahllichtfunktion vorgesehenen Leuchtmittels betätigt wird. Durch die Betätigung strahlt die zumindest eine Lichtquelle wenigstens eines zur Erfüllung der aktiven Rückstrahllichtfunktion vorgesehenen Leuchtmittels Licht ab.

In einem dritten Verfahrensschritt sieht das Verfahren zur Verwirklichung einer aktiven Rückstrahllichtfunktion vor, dass die zumindest eine Lichtquelle wenigstens eines zur Erfüllung der aktiven Rückstrahllichtfunktion vorgesehenen Leuchtmittels wieder abgeschaltet wird, wenn in einer beispielsweise permanenten Wiederholung des ersten Verfahrensschritts festgestellt wurde, dass sich keine Umgebungslichtquelle mehr in der Umgebung befindet.

Das Verfahren zur Verwirklichung einer aktiven Rückstrahllichtfunktion kann einzelne und/oder eine oder mehrere Kombinationen der voranstehend in Verbindung mit der Fahrzeugleuchte mit aktiver Rückstrahllichtfunktion beschriebene Merkmale verwirklichen und/oder umfassen.

Zusätzliche, über die vollständige Lösung der gestellten Aufgabe und/oder über eine Beseitigung der Nachteile des Standes der Technik und/oder über die voran zu den einzelnen Merkmalen genannten Vorteile hinausgehende Vorteile gegenüber dem Stand der Technik sind nachfolgend aufgeführt.

Die Erfindung erhöht die Sicherheit, vorzugsweise sowohl eines eigenen Fahrzeugs und seiner Insassen, als auch eines sich dem eigenen, beispielsweise abgestellten, momentan nicht aktiv am Straßenverkehr teilnehmenden Fahrzeug nähernden dritten Fahrzeugs durch eine Verbesserung der Erkennbarkeit des eigenen Fahrzeugs.

Darüber hinaus wird durch die Erfindung eine Erweiterung der Funktionalität der aktuell bestehenden passiv wirkenden Rückstrahler erreicht, sowie ein neues und alternatives aktives Rückstrahlerkonzept verwirklicht.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: bekannte Prismenformen in einer schematischen, tabellarischen Darstellung, wobei D die Prismenbreite bezeichnet.
- Fig. 2: Hexagonale Prismen in einer frontalen Ansicht in Fig. 2 a) und in einer perspektivischen Ansicht in Fig. 2 b).
- Fig. 3: Tripelprismen in einer frontalen Ansicht.
- Fig. 4: eine Reflektionskurve eines nach oben orientierten hexagonalen Rückstrahler und/oder Rückstrahlerpins.
- Fig. 5: eine Reflektionskurve eines zur Seite orientierten hexagonalen Rückstrahler und/oder Rückstrahlerpins.
- Fig. 6: eine optische Anordnung eines passiven Rückstrahlers und mehrere Lichtquellen, die sich in einem ausgeschalteten Zustand befinden, in einem Längsschnitt. Im Bereich der Lichtquellen befindet sich auch der Empfänger (vorzugsweise ein Fahrzeugfahrer), der das reflektierte Licht später erkennen soll, da diese Lichtquellen z. B. an einem Fahrzeug angebracht sind.
- Fig. 7: eine optische Anordnung eines passiven Rückstrahlers und mehrere Lichtquellen (Sender), die sich in einem angeschalteten Zustand befinden.
- Fig. 8: eine optische Anordnung eines passiven Rückstrahlers und mehrere Lichtquellen (Sender und Empfänger), die sich in einem angeschalteten Zustand befinden, wodurch der passive Rückstrahler systembedingt einen Teil des eingestrahlten Lichts in die Richtung zurückreflektiert, in die sie eingestrahlt wurde
- Fig. 9: ein Ausführungsbeispiel einer optische Anordnung eines aktiven Rückstrahlers einer Fahrzeugleuchte mit aktiver Rückstrahllichtfunktion und mehrere externe Lichtquellen, die sich in einem ausgeschalteten Zustand befinden.
- Fig. 10: die optische Anordnung eines aktiven Rückstrahlers einer Fahrzeugleuchte mit aktiver Rückstrahllichtfunktion und mehrere externe Lichtquellen aus Fig. 9, die sich in einem angeschalteten Zustand befinden, wodurch der aktive Rückstrahler systembedingt Licht mindestens in die Richtung zurückstrahlt, aus der er von den externen Lichtquellen angestrahlt wird.
- Fig. 11: die optische Anordnung eines aktiven Rückstrahlers einer Fahrzeugleuchte mit aktiver Rückstrahllichtfunktion und mehrere externe Lichtquellen, die sich in einem angeschalteten Zustand befinden, wodurch der aktive Rückstrahler systembedingt Licht mindestens in die Richtung zurückstrahlt, aus der er von den externen Lichtquellen angestrahlt wird. Zusätzlich besteht die Möglichkeit, dass er auch ein Blinklicht in die Richtung aus der das Licht eingestrahlt wird aussendet, um eine erweiterte Warnfunktionalität zu verwirklichen.
- Fig. 12: ein Ablaufdiagramm eines Verfahrens zur Verwirklichung einer aktiven Rückstrahllichtfunktion.

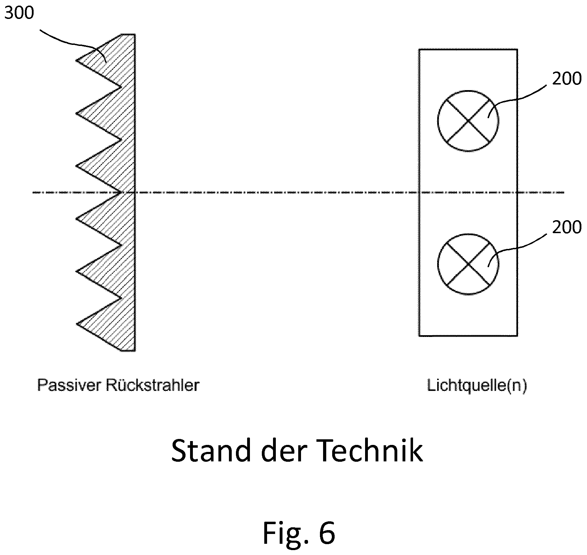

Fig. 6, Fig. 7 und Fig. 8 zeigen schematisch die Funktionsweise eines passiven Rückstrahlersystems in einer zeitlichen Abfolge.

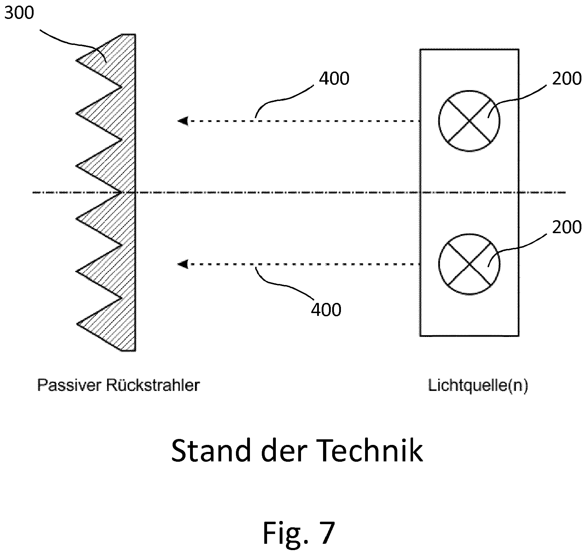

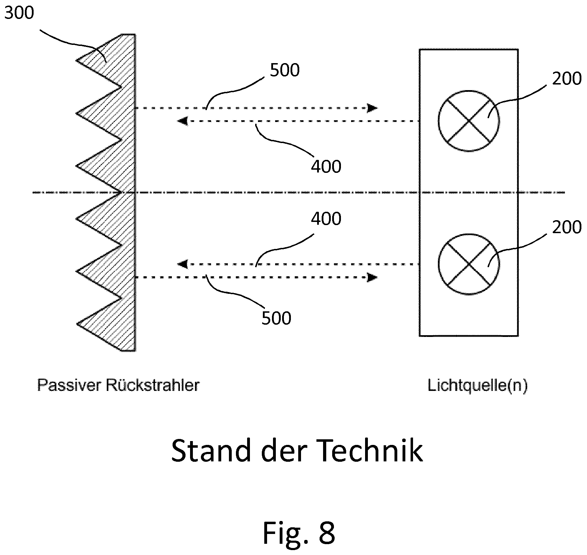

Ausgehend von zunächst ausgeschalteten Lichtquellen 200 (Fig. 6) trifft nach deren Einschalten von diesen ausgestrahltes, durch gestrichelte Pfeile 400 angedeutetes Licht auf einen passiven Rückstrahler 300 (Fig. 7), dessen Funktion einleitend zum Stand der Technik bereits beschrieben ist. Das in den passiven Rückstrahler 300 innerhalb dessen Akzeptanzwinkels eintreffende, durch gestrichelte Pfeile 400 angedeutete Licht wird innerhalb des passiven Rückstrahlers 300 durch Mehrfachreflexion umgekehrt und durch gestrichelte Pfeile 500 angedeutet zu den Lichtquellen 200 zurück reflektiert (Fig. 8).

Dabei sind der Akzeptanzwinkel eingeschränkt und die Lichtstärke des in Fig. 8 durch gestrichelte Pfeile 500 angedeutet zu den Lichtquellen 200 zurückgeworfenen Lichts durch dessen seit dem durch gestrichelte Pfeile 400 angedeuteten Abstrahlen von den Lichtquellen 200 zuvor innerhalb des passiven Rückstrahlers 300 zurückgelegte Wegstrecke abgemindert.

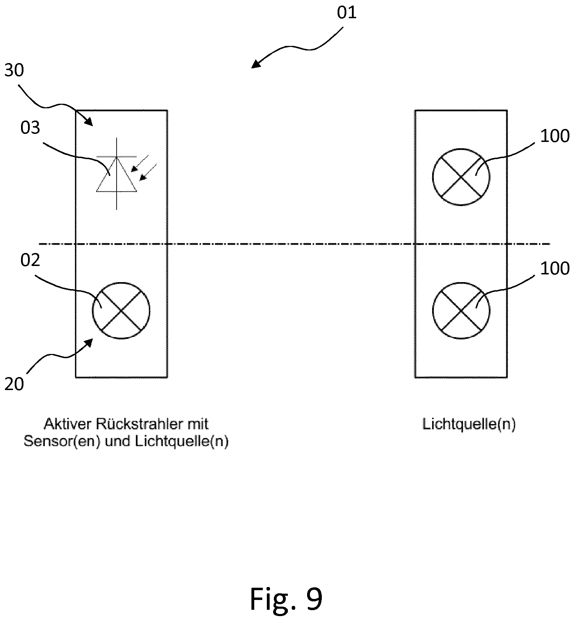

Eine in Fig. 9, Fig. 10, Fig. 11 ganz oder in Teilen dargestellte Fahrzeugleuchte 01 mit aktiver Rückstrahlerfunktion behebt diese Nachteile vollständig unter zusätzlichem Beitrag zur Steigerung der Verkehrssicherheit.

Die Fahrzeugleuchte 01 mit aktiver Rückstrahllichtfunktion umfasst:
- mindestens ein zumindest eine Lichtquelle 02 umfassendes Leuchtmittel 20 zur Erfüllung wenigstens einer aktiven Rückstrahllichtfunktion,
- Beispielsweise einen oder mehrere lichtempfindliche Sensoren 03 umfassende Empfangsmittel 30 für beispielsweise von einer äußeren Lichtquelle 100 auf die Fahrzeugleuchte 01 gerichtetes Licht, und
- mit den Empfangsmitteln 03 verbundene Betätigungsmittel zur Aktivierung wenigstens eines zur Erfüllung der aktiven Rückstrahllichtfunktion vorgesehenen Leuchtmittels 20.

Die Betätigungsmittel und/oder die Empfangsmittel 30 können beispielsweise in das Leuchtmittel 20 integriert sein. Alternativ oder zusätzlich können die Betätigungsmittel und/oder die beispielsweise einen oder mehrere lichtempfindliche Sensoren 03 umfassenden Empfangsmittel 30 in eine elektronische Steuerschaltung integriert sein, eine solche umfassen, oder von einer solchen umfasst sein, die wiederum Teil eines Leuchtmittels 20 sein oder ein Leuchtmittel 20 umfassen, oder von einem Leuchtmittel 20 umfasst sein kann.

Die Betätigungsmittel aktivieren das oder die zur Erfüllung der aktiven Rückstrahllichtfunktion vorgesehenen Leuchtmittel 20 in Abhängigkeit davon, ob die Fahrzeugleuchte 01 angestrahlt wird, oder nicht.

Bei zumindest einer durch wenigstens ein Leuchtmittel der Fahrzeugleuchte 01 zu erfüllenden Lichtfunktion handelt es sich zumindest um die aktive Rückstrahllichtfunktion.

Die Betätigungsmittel aktivieren das oder die zur Erfüllung der aktiven Rückstrahllichtfunktion vorgesehenen Leuchtmittel 20, wenn die Empfangsmittel 30 von einer äußeren Lichtquelle 100 auf die Fahrzeugleuchte 01 gerichtetes Licht empfangen und hierdurch erfassen oder erkennen.

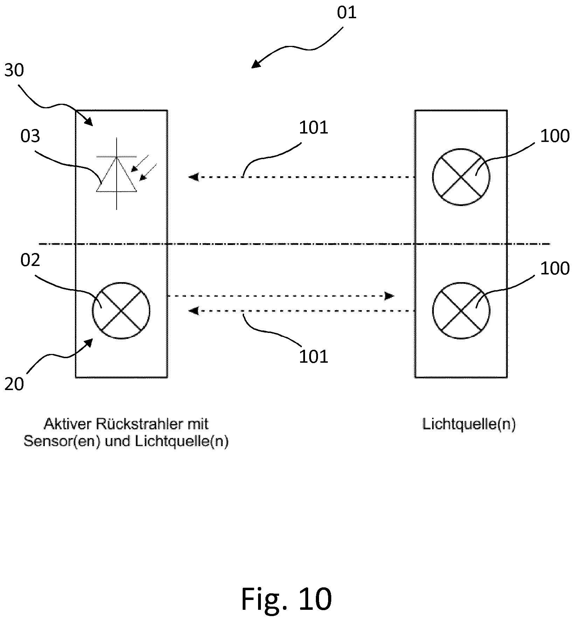

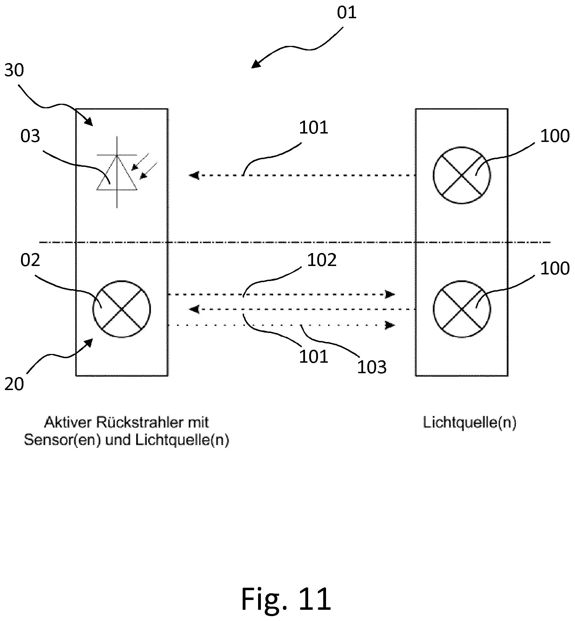

Kenntnis darüber, ob die Fahrzeugleuchte 01 angestrahlt wird, oder nicht, wird über die Empfangsmittel 30 erlangt. Diese können beispielsweise ein Ausgangssignal erzeugen, welches proportional der Helligkeit von einer Lichtquelle 200 ausgehend auf sie gerichteten, in Fig. 10, Fig. 11 durch Pfeile 101 angedeuteten Lichts sein kann. Alternative Ausgestaltungsmöglichkeiten ergeben sich durch ein Ausgangssignal der Empfangsmittel 30, welches proportional einer Helligkeitsdifferenz von einer Lichtquelle 100 ausgehend auf sie gerichteten Lichts zu einer Umgebung beispielsweise der Fahrzeugleuchte 01 und/oder der Lichtquelle 100, von der ausgehend das Licht auf die Fahrzeugleuchte 01 trifft, sein kann.

Erst ab Überschreitung eines Schwellenwerts des Ausgangssignals der Empfangsmittel 30 beispielsweise für die Helligkeit des auf die Fahrzeugleuchte 01 und/oder die Empfangsmittel 30 und/oder deren lichtempfindliche Sensoren 03 gerichteten Lichts und/oder die Helligkeitsdifferenz des von einer Lichtquelle 100 ausgehend auf sie gerichteten Lichts zu einer Umgebung beispielsweise der Fahrzeugleuchte 01 und/oder der Lichtquelle 100, von der ausgehend das Licht auf die Fahrzeugleuchte 01 trifft, aktivieren die Betätigungsmittel das oder die, oder zumindest ein zur Erfüllung der aktiven Rückstrahllichtfunktion vorgesehenes Leuchtmittel 20.

Hierzu können die Betätigungsmittel in der Lage sein, einen Vergleich des Ausgangssignals der Empfangsmittel 30 mit einem oder mehreren Schwellenwerten durchzuführen.

Die Fahrzeugleuchte 01 kann beispielsweise einen im Wesentlichen von einem Leuchtengehäuse und einer Lichtscheibe umschlossenen Leuchteninnenraum umfassen. In dem Leuchteninnenraum kann das mindestens eine, zumindest eine Lichtquelle 02 umfassende Leuchtmittel 20 für wenigstens eine Lichtfunktion der Fahrzeugleuchte 01 beherbergt sein.

Alternativ kann die Fahrzeugleuchte 01 ohne ein Gehäuse ausgeführt und beispielsweise vollständig in Spritzgusstechnik integriert sein, so dass sie beispielsweise lediglich die äußere Gestalt einer Lichtscheibe einnimmt.

Es ist ersichtlich, dass die Erfindung zur Steigerung der Verkehrssicherheit einen aktiven Rückstrahler vorschlägt, der - wenn er angestrahlt wird - selbst aktiv Licht abstrahlt.

Dies ist in Zeiten des vehementen Einzugs von LEDs als Lichtquellen ohne besondere Beeinträchtigung der Energiebilanz eines Bordnetzwerks eines am Straßenverkehr teilnehmenden Fahrzeugs möglich.

Dabei kann es sich um eine Rückstrahlerlichtfunktion handeln, die in eine zur Erfüllung mehrerer Lichtfunktionen vorgesehene Fahrzeugleuchte 01 integriert ist.

Die Fahrzeugleuchte 01 kann demnach zusätzlich zu der aktiven Rückstrahllichtfunktion eine oder mehrere zusätzliche Aufgaben bzw. Funktionen erfüllen, zu deren Erfüllung jeweils eine zusätzliche Lichtfunktion der Fahrzeugleuchte 01 vorgesehen ist.

Beispielsweise kann es sich bei der zusätzlichen Lichtfunktion um eine Wiederholblinklichtfunktion zur Fahrtrichtungsanzeige oder um eine Bremslichtfunktion zur Anzeige einer Bremstätigkeit, oder um eine Begrenzungslichtfunktion zur Sicherstellung einer Sichtbarkeit eines mit der Fahrzeugleuchte 01 ausgestatteten Fahrzeugs bei Tag und/oder Nacht handeln, wie etwa einer Schluss- oder Rücklichtfunktion.

Alternativ kann es sich bei der Fahrzeugleuchte 01 um eine separate Rückstrahlerleuchte mit nur der aktiven Rückstrahllichtfunktion als Lichtfunktion handeln.

Wichtig ist hervorzuheben, dass ganz gleich, ob die Fahrzeugleuchte 01 nur die aktive Rückstrahllichtfunktion als Lichtfunktion oder mehrere Lichtfunktionen einschließlich der aktiven Rückstrahllichtfunktion zu erfüllen in der Lage ist, eine passive Rückstrahlerfunktion - wie bei konventionellen, einleitend in ihrer Funktionsweise beschriebenen Rückstrahlern - in und/oder an der Fahrzeugleuchte 01 zusätzlich verwirklicht sein kann, wie in Fig. 11 durch gepunktete Pfeile 103 dargestellt.

Wenigstens einer Lichtquelle 02 zumindest eines Leuchtmittels 20 der Fahrzeugleuchte 01 können ein oder mehrere zur Ausformung einer Lichtverteilung beitragende Optikelemente zur Lichtlenkung zugeordnet sein, wie beispielsweise Reflektoren, Linsen, Lichtleiterelemente oder im Strahlengang zwischen wenigstens einer Lichtquelle des Leuchtmittels und der Lichtscheibe angeordnete Optikscheiben.

Wichtig ist an dieser Stelle hervorzuheben, dass die Empfangsmittel 30 alternativ oder zusätzlich ebenfalls Optikelemente umfassen können, die beispielsweise deren lichtempfindlichen Sensoren 03 zugeordnet sein können, etwa um den Strahlengang von auf die Fahrzeugleuchte 01 gerichteten Lichts auf einen oder mehrere Sensoren 03 der Empfangsmittel 30 zu bündeln. Dies kann auch dazu genutzt werden, die Richtung festzustellen, aus welcher die Fahrzeugleuchte angestrahlt wird, indem verschiedenen Raumrichtungen zugeordnete Optikelemente unterschiedlichen lichtempfindlichen Sensoren 03 der Empfangsmittel 30 zugeordnet sind. Je nachdem, das Ausgangssignal welchen Sensors 03 die Ausgangssignale der verbleibenden Sensoren übersteigt, kann so die Richtung, aus welcher die Fahrzeugleuchte 01 mit von einer externen Lichtquelle 100 ausgehendem Licht angestrahlt wird, demjenigen Raumwinkelbereich zugeordnet werden, auf den das oder die Optikelemente des entsprechenden Sensors 03 ausgerichtet sind.

Die Lichtscheibe der Fahrzeugleuchte 01 ist durch eine vorzugsweise aus einem Kunststoff hergestellte, zumindest für den für das menschliche Auge sichtbaren Teil des elektromagnetischen Spektrums transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt. Typischerweise wird PC (Polycarbonat) oder PMMA (Polymethylmethacrylat) als Kunststoff für Lichtscheiben eingesetzt.

Das Leuchtengehäuse bzw. der Leuchteninnenraum kann in mehrere Kammern mit jeweils eigenen Lichtquellen 02 und/oder Leuchtmitteln 20 und/oder Optikelementen sowie gegebenenfalls Lichtscheiben unterteilt sein, von denen mehrere Kammern gleiche und/oder jede Kammer eine andere Lichtfunktionen erfüllen kann.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Aufgrund des relativ geringen Stromverbrauchs von modernen Lichtquellen 02, wie etwa LEDs, kann ein derartiges System aus Fahrzeugleuchte 01 mit aktiver Rückstrahllichtfunktion auch über längere Zeit arbeiten, ohne dass der beispielsweise durch eine Bordbatterie gebildete Energiespeicher eines mit einer solchen Fahrzeugleuchte 01 ausgestatteten Fahrzeugs aufgebraucht wird. Auch kann das System zusätzlich zu den aktuell bekannten passiven Rückstrahlersystemen (Fig. 6, Fig. 7, Fig. 8) eingesetzt werden, wie durch den Pfeil 103 in Fig. 11 angedeutet. Grundsätzlich denkbar ist der Betrieb der aktiven Rückstrahllichtfunktion beispielsweise nur im Fahrbetrieb und/oder innerhalb einer vorgebbaren Zeitspanne nach erfolgtem Fahrbetrieb und/oder beispielsweise vor Antritt einer Fahrt nach erfolgtem Entriegeln des Fahrzeugs und/oder erfasster Annäherung beispielsweise des Fahrzeugschlüssels an das Fahrzeug.

Eine bereits angedeutete, vorteilhafte Weiterbildung der Erfindung sieht vor, dass die Empfangsmittel 30 die Richtung erfassen, aus welcher Licht von einer äußeren Lichtquelle 100 ausgehend auf die Fahrzeugleuchte 01 gerichtet ist.

Die Empfangsmittel 30 können vorteilhaft in der Lage sein, zumindest die Richtung zu erfassen, aus welcher Licht von einer äußeren Lichtquelle 100 ausgehend auf die Fahrzeugleuchte 01 gerichtet ist. Dies kann beispielsweise wie voranstehend in Verbindung mit Optikelementen ausgeführt verwirklicht sein. Grundsätzlich sind jedoch auch andere Ausgestaltungen beispielsweise mit Mehrfachsensoren möglich.

Die Empfangsmittel 30 sind demnach bevorzugt in der Lage zumindest die Richtung zu erfassen, in welcher Richtung sich die Lichtquelle 100 befindet, von der aus Licht auf die Fahrzeugleuchte 01 gerichtet ist.

Die Fahrzeugleuchte 01 kann über mehrere zur Erfüllung der aktiven Rückstrahllichtfunktion vorgesehene Leuchtmittel 20 verfügen, die jeweils unterschiedliche Raumwinkelbereiche ausleuchtende Lichtquellen 02 umfassen. Vorteilhaft wird bei angestrahlter Fahrzeugleuchte 01 zumindest dasjenige Leuchtmittel 20 mit derjenigen Lichtquelle 02 oder denjenigen Lichtquellen 02 aktiviert, welche ihr Licht in denjenigen Raumwinkelbereich abstrahlen, der diejenige Richtung umfasst, aus welcher die Fahrzeugleuchte 01 angestrahlt wird. In dieser Richtung befindet sich demnach auch die Lichtquelle 100, von der ausgehend Licht auf die Fahrzeugleuchte 01 gerichtet wird.

Die Betätigungsmittel aktivieren besonders bevorzugt ein zur Verwirklichung einer solchen Lichtfunktion vorgesehenes Leuchtmittel 20, deren Lichtverteilung denjenigen Raumwinkelbereich umfasst, in dem sich die Lichtquelle 100 befindet, deren Licht auf die Fahrzeugleuchte 01 gerichtet ist.

Denkbar ist darüber hinaus eine Verwirklichung mit einem Leuchtmittel 20 mit mehreren, getrennt und unabhängig vonainander ansteuerbaren Lichtquellen 02, von denen jede Lichtquelle 02 einen anderen Raumwinkelbereich abdecken kann. Hierbei kann beispielsweise nur eine Lichtquelle 02 aktiviert werden, welche ihr Licht in den Raumwinkelbereich aussendet, der die Richtung umfasst, in welcher sich die Lichtquelle 100 befindet, deren Licht auf die Fahrzeugleuchte 01 gerichtet ist. Zur Vergrößerung des Akzeptanzwinkels können darüber hinaus noch Lichtquellen 02 aktiviert werden, welche benachbarte Raumwinkelbereiche abdecken.

Zusammengefast verfügt die Fahrzeugleuchte 01 bevorzugt über eines oder mehrere zur Erfüllung der aktiven Rückstrahllichtfunktion vorgesehene Leuchtmittel 20, dessen eine oder mehrere Lichtquellen 02 oder deren jeweilige Lichtquellen 02 jeweils verschiedene Raumwinkelbereiche ausleuchten, und bei angestrahlter Fahrzeugleuchte 01 zumindest diejenige Lichtquelle 02 oder dasjenige Leuchtmittel 20 mit derjenigen Lichtquelle 02 oder denjenigen Lichtquellen 02 aktiviert wird, welches über eine oder mehrere ihr Licht in denjenigen Raumwinkelbereich abstrahlende Lichtquellen 02 verfügt, welcher Raumwinkelbereich diejenige Richtung umfasst, aus welcher die Fahrzeugleuchte 01 angestrahlt wird.

Die Fahrzeugleuchte 01 gemäß dieser Weiterbildung der Erfindung verfügt bevorzugt über mehrere zur Erfüllung der aktiven Rückstrahllichtfunktion vorgesehene Leuchtmittel 20. Jedes Leuchtmittel 20 verfügt über ein oder mehrere Lichtquellen 02. Die eine oder die mehreren Lichtquellen 02 eines ersten Leuchtmittels 20 leuchten einen anderen Raumwinkelbereich aus, als die eine oder die mehreren Lichtquellen 02 eines zweiten Leuchtmittels 20. Gemäß dieser Weiterbildung der Erfindung wird zumindest dasjenige Leuchtmittel 20 aktiviert, welches über eine oder mehrere ihr Licht in denjenigen Raumwinkelbereich abstrahlende Lichtquellen 02 verfügt, der diejenige Richtung umfasst, aus welcher die Fahrzeugleuchte 01 angestrahlt wird.

Wenn die Fahrzeugleuchte 01 zur Verwirklichung nur einer Lichtfunktion ausgebildet ist, die Fahrzeugleuchte demnach nur über ein oder mehrere Leuchtmittel 20 zur Erfüllung ausschließlich einer Lichtfunktion verfügt, handelt es sich bei dieser Lichtfunktion um die aktive Rückstrahllichtfunktion.

Eine vorteilhafte Weiterbildung der Erfindung sieht vor, dass die Betätigungsmittel mit einer Zähleinrichtung verbunden sind, und das oder die zur Erfüllung der aktiven Rückstrahllichtfunktion vorgesehenen Leuchtmittel 20 nach einer Aktivierung erst wieder abschalten, wenn die Zähleinrichtung von einem bei jeder Aktivierung erneut vorgegebenen Startwert auf einen vorgebbaren Endwert gezählt hat.

Bei der Zähleinrichtung kann es sich beispielsweise um eine Zeitschaltung handeln, welche die seit der Aktivierung verstrichene Zeit zählt. Dabei kann eine Zeitspanne vorgebbar sein, zu der und/oder ab Erreichen welcher die Abschaltung erfolgt.

Gemäß einer Weiterbildung der Fahrzeugleuchte 01 kann diese mit den Betätigungsmitteln verbundene Mittel zur Erfassung von Umgebungslicht umfassen. Diese Mittel zur Erfassung von Umgebungslicht gestatten erst bei einer dunklen Umgebung eine Aktivierung des oder der zur Erfüllung der aktiven Rückstrahllichtfunktion vorgesehenen Leuchtmittel 20 durch die Betätigungsmittel in Abhängigkeit davon, ob die Fahrzeugleuchte 01 angestrahlt wird, oder nicht.

Die mit den Betätigungsmitteln verbundenen Mittel zur Erfassung von Umgebungslicht können beispielsweise gemeinsam mit den Betätigungsmitteln und/oder mit den Empfangsmitteln 30 in das Leuchtmittel 20 integriert sein. Alternativ oder zusätzlich können die mit den Betätigungsmitteln verbundenen Mittel zur Erfassung von Umgebungslicht und/oder Betätigungsmittel und/oder die beispielsweise einen oder mehrere lichtempfindliche Sensoren 03 umfassenden Empfangsmittel 30 in eine elektronische Steuerschaltung integriert sein, eine solche umfassen, oder von einer solchen umfasst sein, die wiederum Teil eines Leuchtmittels 20 sein oder ein Leuchtmittel 20 umfassen, oder von einem Leuchtmittel 20 umfasst sein kann.

Erfindungsgemäß führt das Betätigungsmittel eine Aktivierung unter wiederkehrend, beispielsweise kurzer Unterbrechung des Betriebs der einen oder mehreren Lichtquellen 02 wenigstens eines zur Erfüllung der aktiven Rückstrahllichtfunktion vorgesehenen Leuchtmittels 20 aus- und/oder durch.

Je nach Dauer der Unterbrechungen blinkt oder blitzt die aktive Rückstrahllichtfunktion auf.

Ein sich durch die wiederkehrenden Unterbrechungen des Betriebs der Lichtquellen 02 des zur Erfüllung der aktiven Rückstrahllichtfunktion vorgesehenen Leuchtmittels 20 steigert insbesondere die Wahrnehmbarkeit beziehungsweise Wahrnehmungskraft der Rückstrahllichtfunktion der Fahrzeugleuchte 01 für andere Verkehrsteilnehmer.

Im Vergleich zu einem einleitend in seiner Funktion beschriebenen passiven Rückstrahler ist bei der Fahrzeugleuchte 01 mit aktiver Rückstrahllichtfunktion ein Aufblinken und/oder -blitzen zur Steigerung der Aufmerksamkeit einhergehend mit einer Steigerung der Wahrnehmbarkeit beziehungsweise Wahrnehmungskraft generell möglich.

Während der Aktivierung können die Unterbrechungen länger sein, als der Betrieb der einen oder mehreren Lichtquellen 02 wenigstens eines zur Erfüllung der aktiven Rückstrahllichtfunktion vorgesehenen Leuchtmittels 20.

Sind die Unterbrechungen länger, als der zwischen ihnen liegende Betrieb, so blitzt die aktive Rückstrahllichtfunktion auf.

Dies kann situationsabhängig zu einer weiteren Steigerung der Wahrnehmbarkeit beziehungsweise Wahrnehmungskraft herangezogen werden. Darüber hinaus kann ein Aufblitzen, bei dem die Dauer des Betriebs der Lichtquelle 02 kürzer ist, als die Dauer der Unterbrechung, als eine Energiesparmaßnahme bei schwächer werdendem Bordnetz vorgesehen sein.

Um ein solches schwächer werdendes Bordnetz erkennen zu können, können die Betätigungsmittel mit einer Bordnetzüberwachungseinrichtung verbunden sein, deren Ausgangssignal ein Maß für die noch vorhandenen Energiespeicherreserven des Bordnetzes widerspiegelt.

Darüber hinhaus weist die Fahrzeugleuchte eine Alarmfunktion auf, welche bei Annäherung eines Objekts, von dem ausgehend Licht auf die Fahrzeugleuchte 01 gerichtet ist, an die Fahrzeugleuchte 01 beispielsweise mit unverminderter Geschwindigkeit und/oder beispielsweise ab einer vorgebbaren Entfernung beispielsweise beginnt zu blinken oder hell aufzublitzen.

Hierzu ist die Fahrzeugleuchte 01 über eine mit den Betätigungsmitteln verbundene Einrichtung zur Erfassung der Geschwindigkeit und/oder der Entfernung von sich annähernden Objekten verfügt, von denen ausgehend Licht auf die Fahrzeugleuchte 01 gerichtet ist. Die Betätigungsmittel unterbrechen zumindest kurz den Betrieb der einen oder mehreren Lichtquellen 02 des wenigstens einen zur Erfüllung der aktiven Rückstrahllichtfunktion vorgesehenen Leuchtmittels 20 wiederkehrend, wenn nach der Aktivierung des wenigstens einen zur Erfüllung der aktiven Rückstrahllichtfunktion vorgesehenen Leuchtmittels 20 das Objekt eine vorgegebene Geschwindigkeit übersteigt und/oder eine vorgegebene Entfernung unterschreitet und/oder sich mit unverminderter Geschwindigkeit annähert.

Die Fahrzeugleuchte 01 verfügt demnach über eine mit den Betätigungsmitteln verbundene Einrichtung zur Erfassung der Geschwindigkeit von sich annähernden, ihr Licht auf sie richtenden Objekten.

Wurde wenigstens ein zur Erfüllung der aktiven Rückstrahllichtfunktion vorgesehenes Leuchtmittel 20 durch die Betätigungsmittel aktiviert, so veranlasst die Einrichtung zur Erfassung der Geschwindigkeit und/oder der Entfernung von sich annähernden Objekten die Betätigungsmittel beispielsweise bei seit der Aktivierung durch die Betätigungsmittel unverminderter Geschwindigkeit des sich annähernden Objekts zu einer wiederkehrend kurzen Unterbrechung des Betriebs der einen oder mehreren Lichtquellen 02 des wenigstens einen zur Erfüllung der aktiven Rückstrahllichtfunktion vorgesehenen Leuchtmittels 20.

Die Einrichtung zur Erfassung der Geschwindigkeit und/oder der Entfernung von sich annähernden Objekten veranlasst damit bei seit der Aktivierung durch die Betätigungsmittel unverminderter Geschwindigkeit eines sich annähernden Objekts ein Blinken oder Aufblitzen der aktiven Rückstrahllichtfunktion.

Ebenso möglich ist dies bei einer Überschreitung einer vorgebbaren Annäherungsgeschwindigkeit oder bei einer Unterschreitung einer vorgebbaren Entfernung, oder einer Kombination aus unverminderter Geschwindigkeit und/oder Annäherungsgeschwindigkeit und/oder Entfernung, beispielsweise repräsentiert durch Schwellenwerte für beispielsweise Annäherungsgeschwindigkeit und/oder Entfernung oder durch einen Schwellenwertdifferenz für eine Geschwindigkeitsänderung.

Eine vorteilhafte Weiterbildung der Erfindung sieht vor, dass sich die durch kurze Unterbrechungen des Betriebs ergebende Blink- und/oder Blitzfrequenz mit zunehmender Geschwindigkeit eines sich annähernden Objekts steigert.

Oberhalb des Schwellenwerts für die Geschwindigkeit eines sich annähernden Objekts, von dem ausgehend Licht auf die Fahrzeugleuchte 01 gerichtet ist, kann die Blink- und/oder Blitzfrequenz beispielsweise stetig zunehmen, je höher die Annäherungsgeschwindigkeit ist. Vorzugsweise erfolgt dies jedoch innerhalb der Grenzen für die Annäherungsgeschwindigkeit, die für den Straßenverkehr üblich sind, und/oder innerhalb solcher Grenzen für die Blink- und/oder Blitzfrequenz, die für das menschliche Auge eine Steigerung der Aufmerksamkeit einhergehend mit einer Steigerung der Wahrnehmbarkeit beziehungsweise Wahrnehmungskraft der Rückstrahllichtfunktion der Fahrzeugleuchte 01 für andere Verkehrsteilnehmer zur Folge haben. Beispielsweise ist eine derart hohe Blink- und/oder Blitzfrequenz nicht aufmerksamkeitssteigernd, die vom menschlichen Auge nicht mehr eindeutig als Blinken oder Blitzen wahrgenommen wird.

Im Strahlengang der einen oder mehreren Lichtquellen 02 zumindest des von dem oder den zur Erfüllung der aktiven Rückstrahllichtfunktion vorgesehenen Leuchtmittels 20 können auch Luminophore genannte, phosphoreszente Werkstoffe und/oder fluoreszierende Werkstoffe, beispielsweise solche, deren Nachleuchtzeit quasi vernachlässigbar ist, angeordnet sein.

Eine zusätzliche Erweiterung der passiven Funktionalität des Rückstrahlers kann durch den Einsatz von phosphoreszenten Werkstoffen, so genannten Luminophoren und/oder anwendungsabhängig auch fluoreszierende Werkstoffe, deren Nachleuchtzeit quasi vernachlässigbar ist, erfolgen, durch die sich zusätzlich oder alternativ ein Nachleuchten des Rückstrahlers verwirklichen lässt, so dass eine bessere und längere Sichtbarkeit gewährleistet werden kann.

Über eine vollständige Lösung der der Erfindung zugrunde liegende Aufgabe unter Beseitigung der Nachteile des Standes der Technik hinausgehende Vorteile der Erfindung sind nachfolgend ausgeführt.

Die Erfindung beschreibt eine Fahrzeugleuchte 01 mit aktiver Rückstrahllichtfunktion und ein entsprechendes Rückstrahlersystem, dass aktiv arbeiten kann und elektromagnetische Strahlung, vorzugsweise Licht, zum Sender von eingestrahltem Licht zurückstrahlt unter Zuhilfenahme mindestens einer eigenen Strahlungsquelle, vorzugsweise Lichtquelle.

Wird die Fahrzeugleuchte 01 mit aktiver Rückstrahllichtfunktion bestrahlt sendet sie mindestens in die auf sie eingestrahlte Richtung Strahlung zurück. Diese Abstrahlung kann niedrigere, gleiche oder höhere Strahlungswerte aufweisen.

Auch können zusätzliche Funktionalitäten in die aktive Rückstrahllichtfunktion der Fahrzeugleuchte 01 integriert werden.

Zusätzlich kann mit einem derartigen System der Akzeptanzwinkel der Rückstrahllichtfunktion vergrößert werden, der technisch bedingt bei passiven Rückstrahlern eingeschränkt ist.

Fig. 9 und Fig. 10 zeigen schematisch die Funktionsweise eines erfindungsgemäßen aktiven Rückstrahlersystems einer Fahrzeugleuchte 01 mit aktiver Rückstrahllichtfunktion in einer zeitlichen Abfolge ausgehend von Fig. 9 und endend bei Fig. 10. Detektieren die Empfangsmittel 30 der Fahrzeugleuchte 01 mittels beispielsweise mindestens eines lichtempfindlichen Sensors 03, der auch vorzugsweise die Richtung des einfallenden Lichts bestimmen kann, aktiviert dies umgehend mindestens eine Lichtquelle 02 eines zur Erfüllung der aktiven Rückstrahllichtfunktion vorgesehenen Leuchtmittels 20 in der Nähe des Sensors 03, die Licht zumindest in die Richtung des Senders zurückschickt. Dieses Zurückschicken erfolgt mit etwas Unschärfe oder kann mit etwas Unschärfe erfolgen. Es muss sich demnach bei der Lichtquelle 02 nicht um einen Laserstrahl handeln, der sein Licht punktgenau gerichtet abgibt. Demnach genügt es, dass die Lichtquelle 02 des zur Erfüllung der aktiven Rückstrahllichtfunktion vorgesehenen Leuchtmittels 20 ihr Licht in eine Richtung zurückschickt, in deren Bereich sich auch die Quelle des auf die Fahrzeugleuchte 01 und deren Empfangsmittel 30 gerichteten Lichts befindet, wie beispielsweise ein drittes Fahrzeug mit dessen Fahrzeugführer. Diese Aktivierung erfolgt durch die mit den Empfangsmitteln 30 verbundenen Betätigungsmittel.

Durch eine solche aktive Rückstrahlichtfunktion kann die stark eingeschränkte Richtungsabhängigkeit eines passiven Rückstrahlers ausgeglichen werden oder sogar mehr Licht zurückgestrahlt werden, als eingestrahlt wird.

Bei dem lichtempfindlichen Sensor 03, der auch vorzugsweise die Richtung des einfallenden Lichts bestimmen kann, handelt es sich beispielsweise um wenigstens eine entsprechend gestaltete Photodiode und/oder mindestens eine Kamera mit Bildauswertung.

Wie in Fig. 11 beispielhaft gezeigt, kann die kurz auch als aktiver Rückstrahler bezeichnete Fahrzeugleuchte 01 mit aktiver Rückstrahllichtfunktion zusätzlich auch weitere Funktionalitäten wie beispielsweise ein Blinken oder einen erweiterten Lichtabstrahlbereich im Vergleich zur eingestrahlten Lichtrichtung des Senders verwirklichen, um eine zusätzliche Warnfunktionalität und/oder Sichtbarkeit eines mit der Fahrzeugleuchte 01 ausgestatteten eigenen Fahrzeugs zu realisieren. Ein derartiges System ist in dieser Ausbaustufe vergleichbar mit einem Matrixscheinwerfer, der auf einfallendes Licht entsprechend reagiert, und nicht wie aktuell umgesetzt die Bereiche, aus der Licht kommt, ausblendet, sondern stattdessen aktiv auch miteinbezieht. Denkbar ist für ein Fahrzeug mit bestehendem Matrixscheinwerfer, dass dieser als elementarer Baustein eines aktiven Rückstrahlerkonzepts nach vorne auch als solcher verwendet wird und so die Verkehrssicherheit in den aktuell eher unüblichen Bereich nach vorne für Rückstrahler erhöht. Dieses Verfahren ist ein weiterer Teil der Erfindung.

Aufgrund des relativ geringen Stromverbrauchs von modernen Lichtquellen, insbesondere bevorzugt von LEDs, kann ein derartiges System auch über längere Zeit arbeiten, ohne dass ein beispielsweise durch eine Bordbatterie gebildeter Energiespeicher eines mit der Fahrzeugleuchte 01 mit aktiver Rückstrahllichtfunktion ausgestatteten eigenen Fahrzeugs aufgebraucht ist. Auch kann das System zusätzlich zu den aktuell bekannten passiven Rückstrahlersystemen eingesetzt werden. Denkbar ist auch ein Einsatz nur im Fahrbetrieb bei aktiver Teilnahme am Straßenverkehr. Hierdurch können die Nachteile des Standes der Technik verringert und sogar aktiv eine Verbesserung der Verkehrssicherheit herbeigeführt werden.

Ebenfalls wichtig ist hervorzuheben, dass sich die Erfindung nicht auf eine Fahrzeugleuchte 01 mit aktiver Rückstrahllichtfunktion erschöpft, sondern ebenso ein Verfahren zur Verwirklichung einer aktiven Rückstrahllichtfunktion umfasst.

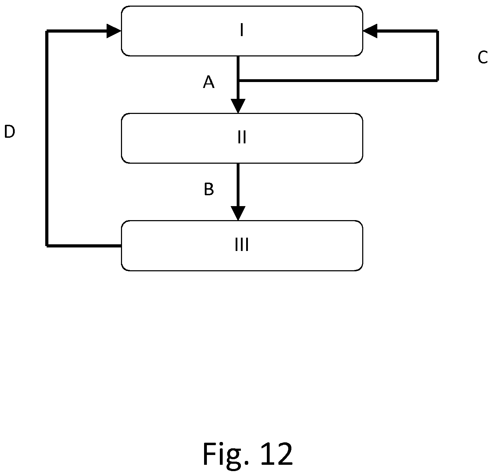

Ein solches in seinem Ablauf in Fig. 12 dargestelltes Verfahren zur Verwirklichung einer aktiven Rückstrahllichtfunktion kann vorsehen, in einem ersten Verfahrensschritt I zunächst festzustellen, ob sich eine kurz als Umgebungslichtquelle bezeichnete Lichtquelle in der Umgebung befindet, oder nicht.

Dabei können derartige Umgebungslichtquellen berücksichtigt werden, welche eine vorgegebene oder vorgebbare Mindestlichtstärke aufweisen. Hierdurch muss nicht jeder noch so kleinen und/oder weit entfernten Umgebungslichtquelle Licht zurückgestrahlt werden.

Alternativ oder zusätzlich können derartige Umgebungslichtquellen unberücksichtigt bleiben, welche eine vorgegebene oder vorgebbare Höchstlichtstärke übersteigen.

Beispielsweise kann hierdurch Sonnenlicht ausgeschlossen werden und/oder eine direkte helle Anstrahlung beispielsweise eines abgestellten, mit einer Fahrzeugleuchte 01 mit aktiver Rückstrahllichtfunktion ausgestatteten eigenen Fahrzeugs. Eine derart starke Lichtanstrahlung macht eine aktive Rückstrahllichtfunktion überflüssig, weil das durch die Anstrahlung von beliebigen Flächen zurückgespiegelte Licht bereits so hell ist, dass ein zusätzlich ausgestrahltes Licht für den Betrachter nicht ins Gewicht fällt, oder er bereits geblendet wird.

In einem wie durch einen Pfeil A in Fig. 12 dargestellt auf den ersten Verfahrensschritt I folgenden zweiten Verfahrensschritt II kann das Verfahren zur Verwirklichung einer aktiven Rückstrahllichtfunktion vorsehen, dass wenn sich eine Umgebungslichtquelle in der Umgebung befindet, zumindest eine Lichtquelle 02 wenigstens eines zur Erfüllung der aktiven Rückstrahllichtfunktion vorgesehenen Leuchtmittels 20 betätigt wird. Durch die Betätigung strahlt die zumindest eine Lichtquelle 02 wenigstens eines zur Erfüllung der aktiven Rückstrahllichtfunktion vorgesehenen Leuchtmittels 20 Licht ab.

In einem wie in Fig. 12 durch einen Pfeil B dargestellt auf den zweiten Verfahrensschritt II folgenden dritten Verfahrensschritt III kann das Verfahren zur Verwirklichung einer aktiven Rückstrahllichtfunktion vorsehen, dass die zumindest eine Lichtquelle 02 wenigstens eines zur Erfüllung der aktiven Rückstrahllichtfunktion vorgesehenen Leuchtmittels 20 wieder abgeschaltet wird, wenn in einer in Fig. 12 durch einen Pfeil C dargestellt permanent stattfindenden Wiederholung des ersten Verfahrensschritts I festgestellt wurde, dass sich keine Umgebungslichtquelle in der Umgebung befindet.

Das Verfahren zur Verwirklichung einer aktiven Rückstrahllichtfunktion kann vorsehen, dass wie in Fig. 12 durch einen Pfeil D angedeutet auf den dritten Verfahrensschritt III wieder der erste Verfahrensschritt I folgt und so das Verfahren zur Verwirklichung einer aktiven Rückstrahllichtfunktion beispielsweise permanent wiederholt werden kann.

Das Verfahren zur Verwirklichung einer aktiven Rückstrahllichtfunktion kann einzelne und/oder eine oder mehrere Kombinationen der voranstehend in Verbindung mit der Fahrzeugleuchte 01 mit aktiver Rückstrahllichtfunktion beschriebene Merkmale verwirklichen und/oder umfassen, wie zusätzliche Richtungserkennung einer Umgebungslichtquelle, Abstrahlung der aktiven Rückstrahllichtfunktion in einen Raumwinkelbereich, welche die Richtung umfasst, in welcher sich die Umgebungslichtquelle befindet, etc.

Die Erfindung ist nicht durch die Beschreibung anhand der Ausführungsbeispiele beschränkt. Vielmehr umfasst die Erfindung jede Kombination von Merkmalen gemäß den Ansprüchen.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Lichtquelle
- 03: Sensor

- 20: Leuchtmittel

- 30: Empfangsmittel

- 100: Lichtquelle
- 101: Pfeil
- 102: Pfeil
- 103: Pfeil

- 200: Lichtquelle
- 300: Rückstrahler
- 400: Pfeil
- 500: Pfeil

- I: Verfahrensschritt
- II: Verfahrensschritt
- III: Verfahrensschritt

- A: Pfeil
- B: Pfeil
- C: Pfeil
- D: Pfeil

## Patentansprüche

1. Fahrzeugleuchte (01) mit aktiver Rückstrahllichtfunktion, umfassend:
- mindestens ein zumindest eine Lichtquelle (02) umfassendes Leuchtmittel (20) zur Erfüllung wenigstens einer aktiven Rückstrahllichtfunktion,
- Empfangsmittel (30) für auf die Fahrzeugleuchte gerichtetes Licht (101), und
- mit den Empfangsmitteln (30) verbundene Betätigungsmittel zur Aktivierung des wenigstens einen zur Erfüllung der aktiven Rückstrahllichtfunktion vorgesehenen Leuchtmittels (20),
wobei die Betätigungsmittel das oder die zur Erfüllung der aktiven Rückstrahllichtfunktion vorgesehenen Leuchtmittel (20) in Abhängigkeit davon aktivieren, ob die Fahrzeugleuchte (01) angestrahlt wird, oder nicht, **dadurch gekennzeichnet, dass**
- das Betätigungsmittel eine Aktivierung unter wiederkehrender Unterbrechung des Betriebs der einen oder mehreren Lichtquellen (02) des wenigstens einen zur Erfüllung der aktiven Rückstrahllichtfunktion vorgesehenen Leuchtmittels (20) aus- und/oder durchführt, und
- die Fahrzeugleuchte(01) über eine mit den Betätigungsmitteln verbundene Einrichtung zur Erfassung der Geschwindigkeit und/oder der Entfernung von sich annähernden Objekten verfügt, von denen ausgehend Licht auf die Fahrzeugleuchte gerichtet ist,
wobei die Betätigungsmittel den Betrieb der einen oder mehreren Lichtquellen (02) des wenigstens einen zur Erfüllung der aktiven Rückstrahllichtfunktion vorgesehenen Leuchtmittels (20) wiederkehrend unterbrechen, wenn nach der Aktivierung des wenigstens einen zur Erfüllung der aktiven Rückstrahllichtfunktion vorgesehenen Leuchtmittels (20) das Objekt:
- eine vorgegebene Geschwindigkeit übersteigt und/oder
- eine vorgegebene Entfernung unterschreitet und/oder
- sich mit unverminderter Geschwindigkeit annähert.

2. Fahrzeugleuchte nach Anspruch 1, wobei die Empfangsmittel (30) die Richtung erfassen, aus welcher Licht von einer äußeren Lichtquelle ausgehend auf die Fahrzeugleuchte gerichtet ist.

3. Fahrzeugleuchte nach Anspruch 2, wobei sie über mehrere zur Erfüllung der aktiven Rückstrahllichtfunktion vorgesehene Leuchtmittel (20) verfügt, die jeweils unterschiedliche Raumwinkelbereiche ausleuchtende Lichtquellen (02) umfassen, und bei angestrahlter Fahrzeugleuchte zumindest dasjenige Leuchtmittel (20) mit derjenigen Lichtquelle oder denjenigen Lichtquellen (02) aktiviert wird, welche ihr Licht in denjenigen Raumwinkelbereich abstrahlen, der diejenige Richtung umfasst, aus welcher die Fahrzeugleuchte angestrahlt wird.

4. Fahrzeugleuchte nach Anspruch 1, 2 oder 3, wobei wenn die Fahrzeugleuchte über ein oder mehrere Leuchtmittel (20) zur Erfüllung ausschließlich einer Lichtfunktion verfügt, es sich hierbei um die aktive Rückstrahllichtfunktion handelt.

5. Fahrzeugleuchte nach einem der Ansprüche 1 bis 4, wobei die Betätigungsmittel mit einer Zähleinrichtung verbunden sind, und das oder die zur Erfüllung der aktiven Rückstrahllichtfunktion vorgesehenen Leuchtmittel (20) nach einer Aktivierung erst wieder abschalten, wenn die Zähleinrichtung von einem bei jeder Aktivierung erneut vorgegebenen Startwert auf einen vorgebbaren Endwert gezählt hat.

6. Fahrzeugleuchte nach einem der Ansprüche 1 bis 5, wobei sie mit den Betätigungsmitteln verbundene Mittel zur Erfassung von Umgebungslicht umfasst, welche eine Aktivierung des oder der zur Erfüllung der aktiven Rückstrahllichtfunktion vorgesehenen Leuchtmittel (20) durch die Betätigungsmittel erst bei einer dunklen Umgebung gestatten.

7. Fahrzeugleuchte nach einem der voranstehenden Ansprüche, wobei während der Aktivierung die Unterbrechungen länger sind, als der Betrieb der einen oder mehreren Lichtquellen (02) des wenigstens einen zur Erfüllung der aktiven Rückstrahllichtfunktion vorgesehenen Leuchtmittels (20).

8. Fahrzeugleuchte einem der voranstehenden Ansprüche, wobei die sich durch kurze Unterbrechungen des Betriebs ergebende Blink- und/oder Blitzfrequenz mit zunehmender Geschwindigkeit eines sich annähernden Objekts steigert.

9. Fahrzeugleuchte nach einem der voranstehenden Ansprüche, wobei im Strahlengang der einen oder mehreren Lichtquellen (02) des wenigstens einen zur Erfüllung der aktiven Rückstrahllichtfunktion vorgesehenen Leuchtmittels (20) phosphoreszente Werkstoffe und/oder fluoreszierende Werkstoffe angeordnet sind.

## Claims

1. A vehicle lamp (01) with active retroreflective function, the vehicle lamp (01) comprising:
- at least one illuminant (20) comprising at least one light source (02) to fulfill at least one active retroreflective function,
- receiving means (30) for light (101) directed onto the vehicle lamp, and
- actuating means to activate the at least one illuminant (20) provided to fulfill the active retroreflective function, said actuating means being connected to the receiving means (30),
wherein the actuating means activate the illuminant (20) or the illuminants (20) provided to fulfill the active retroreflective function depending on whether or not the vehicle lamp (01) is illuminated, **characterised in that**
- the actuating means carries out and/or performs an activation under recurring interruption of the operation of the one or more light sources (02) of the at least one illuminant (20) provided to fulfill the active retroreflective function, and
- the vehicle lamp (01) has a device to detect the speed and/or the distance of approaching objects emanating from which light is directed onto the vehicle lamp, said detection device being connected to the actuating means, wherein the actuating means recurringly interrupt the operation of the one or more light sources (02) of the at least one illuminant (20) provided to fulfill the active retroreflective function if, after the activation of the at least one illuminant (20) provided to fulfill the active retroreflective function, the object:
- exceeds a specified speed, and/or
- falls below a specified distance, and/or
- approaches at undiminished speed.

2. The vehicle lamp according to claim 1, wherein the receiving means (30) detect the direction from which light emanating from an external light source is directed onto the vehicle lamp.

3. The vehicle lamp according to claim 2, wherein the vehicle lamp has a plurality of illuminants (20) provided to fulfill the active retroreflective function, said illuminants each comprising light sources (02) illuminating different solid angle areas, and, if the vehicle lamp is illuminated, at least the illuminant (20) is activated with the light source or the light sources (02) emitting their light into the solid angle area that comprises the direction from which the vehicle lamp is illuminated.

4. The vehicle lamp according to claim 1, 2, or 3, wherein, if the vehicle lamp has one or more illuminants (20) to fulfill exclusively one light function, this is the active retroreflective function.

5. The vehicle lamp according to one of the claims 1 to 4, wherein the actuating means are connected to a counting device, and said actuating means do not switch off the illuminant or the illuminants (20) provided to fulfill the active retroreflective function again after an activation until the counting device has completed counting from a start value specified anew with each activation to a specifiable end value.

6. The vehicle lamp according to one of the claims 1 to 5, wherein the vehicle lamp comprises ambient light detecting means connected to the actuating means, said ambient light detecting means allowing the illuminant or the illuminants (20) provided to fulfill the active retroreflective function to be activated by the actuating means only in a dark environment.

7. The vehicle lamp according to one of the previous claims, wherein during the activation, the interruptions are longer than the operation of the one or more light sources (02) of the at least one illuminant (20) provided to fulfill the active retroreflective function.

8. The vehicle lamp according to one of the previous claims, wherein the blinking frequency and/or flashing frequency resulting from short interruptions of the operation accelerates with the speed of an approaching object increasing.

9. The vehicle lamp according to one of the previous claims, wherein phosphorescent materials and/or fluorescent materials are arranged in the light path of the one or more light sources (02) of the at least one illuminant (20) provided to fulfill the active retroreflective function.

## Revendications

1. Phare de véhicule (01) doté de fonction catadioptrique active, comprenant :
- au moins un moyen d'éclairage (20) comprenant au moins une source lumineuse (02), destiné à remplir au moins une fonction catadioptrique active,
- des moyens récepteurs (30) de la lumière (101) dirigée sur ledit phare de véhicule, et
- des moyens actionneurs reliés auxdits moyens récepteurs (30), destinés à activer ledit au moins un moyen d'éclairage (20) prévu pour remplir la fonction catadioptrique active,
lesdits moyens actionneurs activant le ou les moyens d'éclairage (20) prévu(s) pour remplir la fonction catadioptrique active en fonction de ce que le phare de véhicule (01) est illuminé ou non, **caractérisé en ce que**
- ledit moyen actionneur réalise et/ou exécute un actionnement sous interruption récurrente du fonctionnement de ladite une ou desdites plusieurs source(s) lumineuse(s) (02) dudit au moins un moyen d'éclairage (20) prévu pour remplir la fonction catadioptrique active, et
- que le phare de véhicule (01) dispose d'un système, connecté aux moyens actionneurs, destiné à détecter la vitesse et/ou de la distance des objets s'approchant, dont émane de la lumière dirigée sur le phare de véhicule,
les moyens actionneurs interrompant de manière récurrente le fonctionnement de ladite une ou desdites plusieurs sources lumineuses (02) dudit au moins un moyen d'éclairage (20) prévu pour remplir la fonction catadioptrique active, si, une fois que le moyen d'éclairage (20) prévu pour remplir la fonction catadioptrique active a été activé, l'objet :
- dépasse une vitesse donnée, et/ou
- passe en-deça d'une distance donnée, et/ou
- se rapproche à une vitesse non réduite.

2. Phare de véhicule selon la revendication 1, les moyens récepteurs (30) détectant la direction dans laquelle de la lumière émanant d'une source lumineuse externe est dirigée sur le phare de véhicule.

3. Phare de véhicule selon la revendication 2, disposant de plusieurs moyens d'éclairage (20) prévus pour remplir la fonction catadioptrique active, lesquels moyens d'éclairage comprennent des sources lumineuses (02) éclairant chacune différentes zones d'angle dans l'espace, et lorsque le phare de véhicule est éclairé, au moins ledit moyen d'éclairage (20) étant activé avec la source lumineuse ou les sources lumineuses (02) qui reflètent sa lumière dans la zone d'angle dans l'espace qui comprend la direction à partir de laquelle le phare de véhicule est éclairé.

4. Phare de véhicule selon la revendication 1, 2 ou 3, s'agissant ici, si le phare de véhicule dispose d'un ou de plusieurs moyen(s) d'éclairage (20) destiné(s) à remplir exclusivement une fonction d'éclairage, de la fonction catadioptrique active.

5. Phare de véhicule selon l'une quelconque des revendications 1 à 4, les moyens actionneurs étant connectés à un système compteur, et le ou les moyen(s) d'éclairage (20) prévu(s) pour remplir la fonction catadioptrique active ne s'éteignant à nouveau après un actionnement que lorsque ledit système compteur a compté à partir d'une valeur de départ prédéterminée à nouveau à chaque actionnement jusqu'à une valeur finale prédéterminée.

6. Phare de véhicule selon l'une quelconque des revendications 1 à 5 comprenant des moyens de détection de lumière environnante connectés aux moyens actionneurs, lesquels moyens de détection ne permettent d'actionner le ou les moyen(s) d'éclairage (20), prévu(s) pour remplir la fonction catadioptrique active, par le biais des moyens d'actionnement que lorsqu'il fait sombre.

7. Phare de véhicule selon l'une quelconque des revendications précédentes, les interruptions étant, pendant l'actionnement, plus longues que le fonctionnement de l'une ou des plusieurs sources lumineuses (20) de l'au moins un moyen d'éclairage (20) prévu pour remplir la fonction catadioptrique active.

8. Phare de véhicule selon l'une quelconque des revendications précédentes, la fréquence de clignotement et/ou d'éclair, qui résulte de courtes interruptions du fonctionnement, augmentant au fur et à mesure qu'augmente la vitesse d'un objet qui s'approche.

9. Phare de véhicule selon l'une quelconque des revendications précédentes, des matériaux phosphorescents et/ou des matériaux fluorescents étant agencés dans la trajectoire du rayon de ladite une ou desdites plusieurs source(s) lumineuse(s) (02) de l'au moins un moyen d'éclairage (20) prévu pour remplir la fonction catadioptrique active.
